# EUROPEAN PATENT SPECIFICATION

(11) **EP 2 073 441 B1**
(45) Date of publication and mention of the grant of the patent: **14.12.2011**
(21) Application number: 07291586.1
(22) Date of filing: 21.12.2007
(51) Int. Cl.: H04L 12/24, H04M 3/00

(54) **Element management system, network element and method for an improved configuration of data lines**
Elementverwaltungssystem, Netzelement und Verfahren zur verbesserten Konfiguration von Datenleitungen
Système de gestion d'élément, élément de réseau et procédé pour configuration améliorée de lignes de données

(43) Date of publication of application: 24.06.2009
(73) Proprietor: Alcatel Lucent, 75008 Paris (FR)
(72) Inventor: Devolder, Frank, 2820 Bonheiden (BE)
(74) Representative: Narmon, Gisèle Marie Thérèse

(56) References cited:
- EP-A- 1 755 283
- WO-A-02/19135

## Description

The present invention generally relates to an element management system and a network element arranged for communicating with each other for managing the configuration of a number of data lines by means of configuration profiles, each profile containing a set of configuration parameters. The invention further relates to a system for managing the configuration of a number of data lines by means of configuration profiles comprising:
- a first management system arranged for sending a general profile with a predefined set of configuration parameters to a network element;
- a second management system arranged for sending a line-specific profile to a network element. Finally the invention relates to a method for managing the configuration of a number of data lines by means of configuration profiles.

EP 1 755 283 discloses a system for configuring terminal parameters wherein the configuration parameters are generated at the network management side and sent to the DSLAM where the parameters are stored. The download of the configuration parameters is implemented through the interaction between the DSLAM and the terminal.

In a typical access network a number of end users are connected to an access node, such as a DSLAM (Digital Subscriber Line Access Multiplexer), via a Customer Premises Equipment (CPE) and a number of lines, such as DSL (Digital Subscriber Line) lines. DSL lines are usually managed by means of configuration profiles, grouping all DSL related configuration parameters, such as the bit rate, the transmit power spectral density, etc.

Typically a configuration profile is assigned to multiple lines sharing the same configuration characteristics. A profile contains a number of parameters. The bigger this number, the more parameter combinations are possible. For each parameter combination used, a dedicated profile instance has to be created.

Since the number of configurable parameters keeps increasing, there is a continuous need to increase the maximum number of supported profiles in the network element, for example a DSLAM. This has a significant impact on the memory requirements to store this huge amount of data. Also, this will have an impact on the performance of the product (start-up, database backup/restore, line configuration).

For a large number of configuration parameters (typically more than 100 for DSL lines) there is a need to be able to configure a line-specific value in order to fully optimize the configuration of that particular line. This requires the creation of an additional line-specific profile, even in the situation where only one parameter is deviating from the generally used values. Besides the impact on memory and performance, this had the additional drawback that all parameters have to be specified in this new profile, even in a situation where you wish to overrule only one specific parameter for that line whilst maintaining the general values for the other parameters. This explosive number of profiles makes the management of DSL lines very complex for the operator.

To address this problem an existing solution consists in supporting as many profiles as the maximum number of lines. In that way a line-specific configuration can be created for every line. However, with such a solution the memory and performance issues will remain. Moreover it becomes difficult to manage the configuration of all individual lines, because each line is using a separate profile. More in particular, this solution does not allow for distinguishing between common parts in the configuration and line-specific deviations, because all parameters are simply considered to be line-specific.

In the existing systems, when a profile has to be amended, a SWAP profile command can be initiated by an element management system, also called a network analyser, towards the access node in order to ensure a change from an actual predefined parameter set being assigned to a particular DSL line, towards a more suitable predefined set of parameters.

The object of the invention is to provide an element management system, a network element and a method according to the preamble, which provide a flexible solution based on the profile concept, requiring less storage capacity and improving the manageability of the profiles when compared to the systems and methods of the prior art.

To reach this object the element management system according to the invention is distinguished by the features of claim 5 and the network element is distinguished by the features of claim 1.

In that way the management system only has to send a a subset of values for the configuration parameters for a specific data line to be changed, which subset is used by the network element to create an amended profile by merging the subset with the predefined profile previously used to configure a group of data lines connected to the network element.

Typically two management systems will be used for managing the configuration of the data lines, as claimed in claim 7. The first management system is arranged for sending a general profile with a predefined set of configuration parameters to a network element, and in other words is responsible for the upfront provisioning of all the data lines leaving the network element. The second management system is arranged for configuring a specific line and is typically distinguished by the features of claim 1. The second management system is preferably monitoring the characteristics of the data lines during operation in order to further optimise the configuration of the lines on an individual basis.

The concept of working with a general full configuration profile used for a group of data lines, and line-specific configuration profiles allows for the second management system to fine-tune some specific configuration parameters without fully taking over the responsibility for configuring all parameters of the data lines connected to a network element. In other words the responsibility for the configuration is split between two management systems, which provides for a very flexible management.

The invention is particularly useful for lines with a high number of configuration parameters such as DSL lines. However, the concept is also applicable for other data lines such as fiber.

According to a preferred embodiment the network element is a DSLAM, and the element management system is arranged for communicating with a DSLAM for managing the configuration of a number of DSL lines.

According to a further developed embodiment the second element management system is arranged for sending the subset in the same profile format as the general profile, wherein each parameter not contained in the subset is given a specific value indicating that the parameter does not have to be changed.

The problems of the prior art are further solved by the method of the invention which is basically characterized by claim 9. Preferably, the subset and the reference to the specific data line to be changed are sent by an element management system to a network element, wherein the element management system is monitoring the condition of a number of data lines, e.g. the stability, wherein in case of a bad condition the element management system sends a suitable subset of the configuration parameters to be changed.

Advantageous embodiments are disclosed in the dependent claims.

The accompanying drawings are used to illustrate presently preferred non-limiting exemplary embodiments of the present invention. The above and other advantages features and objects of the invention will become more apparent and the invention will be better understood from the following detailed description when read in conjunction with the accompanying drawings in which:
- Figure 1 shows a first general example of part of a network in which the concept of the invention may be implemented;
- Figure 2 shows a second example of a network model with access nodes in which the concept of the invention may be implemented;
- Figures 3(A) and (B) illustrate schematically an example of a configuration profile A according to the prior art and of a delta profile B for use in the system and method of the invention.
- Figure 4 shows a flow chart of an embodiment of the method of the invention.

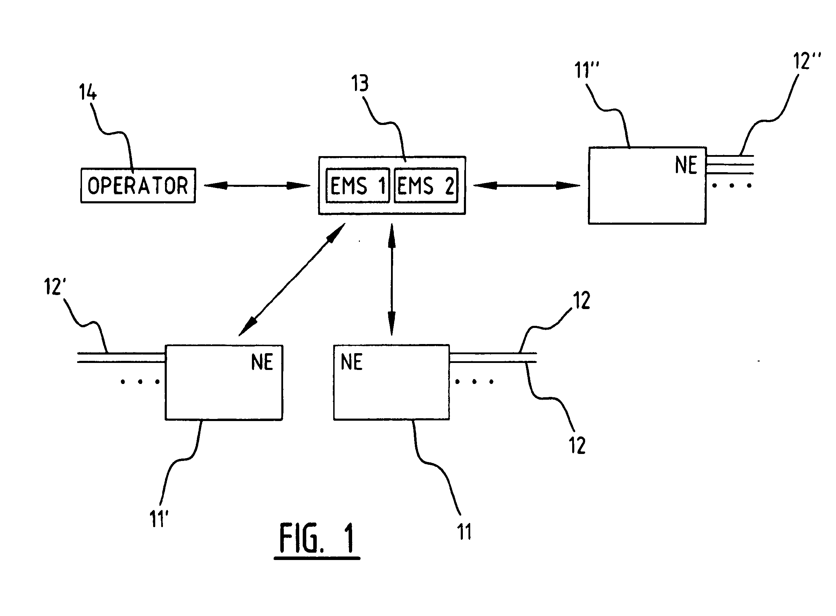

Figure 1 illustrates schematically an example of a part of a network comprising a number of network elements (NEs) 11, 11', 11", managed by a system 13 comprising a first element management system EMS1 and a second element management system EMS 2. The system 13 is controlled by an operator 14. A number of data lines 12, 12', 12" connect a NE 11, 11', 11" with users or other network elements. The first en second element management systems send instructions regarding the configurations parameters to be used.

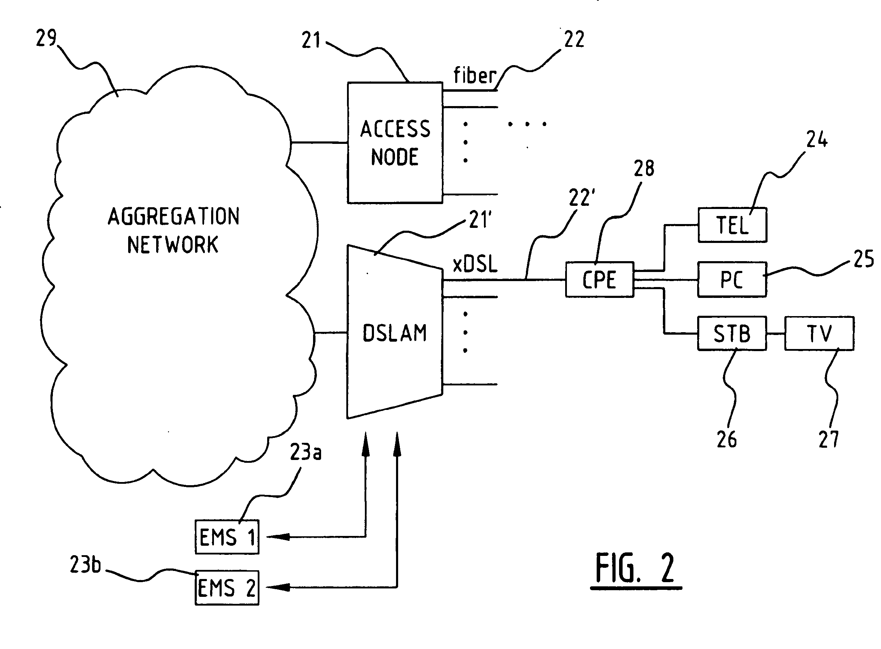

Figure 2 shows in more detail a part of a possible network model of the state of the art, being an arrangement of communication facilities between end users and service providers (SPs), wherein the network elements are access nodes. An aggregation network 29, for example an EMAN, carries traffic between access nodes 21 and the SPs. The access nodes, typically DSLAMs 21' provide connectivity via data lines 22, 22' with the end user (e.g. telephone 24, a PC 25, a set top box 26 with TV 27) via a Customer Premises Equipment (CPE) 28, typically a modem. A first management system 23a and a second management system 23b exchange instructions with the DSLAMs regarding the configuration parameters to be used.

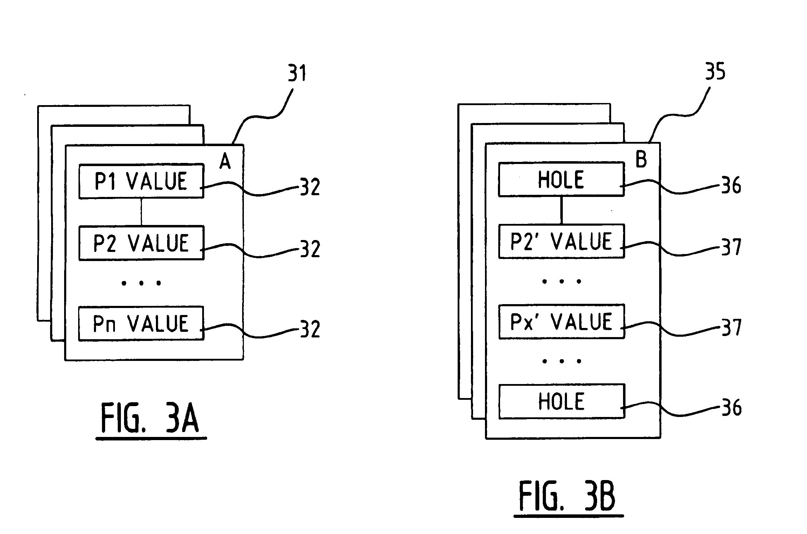

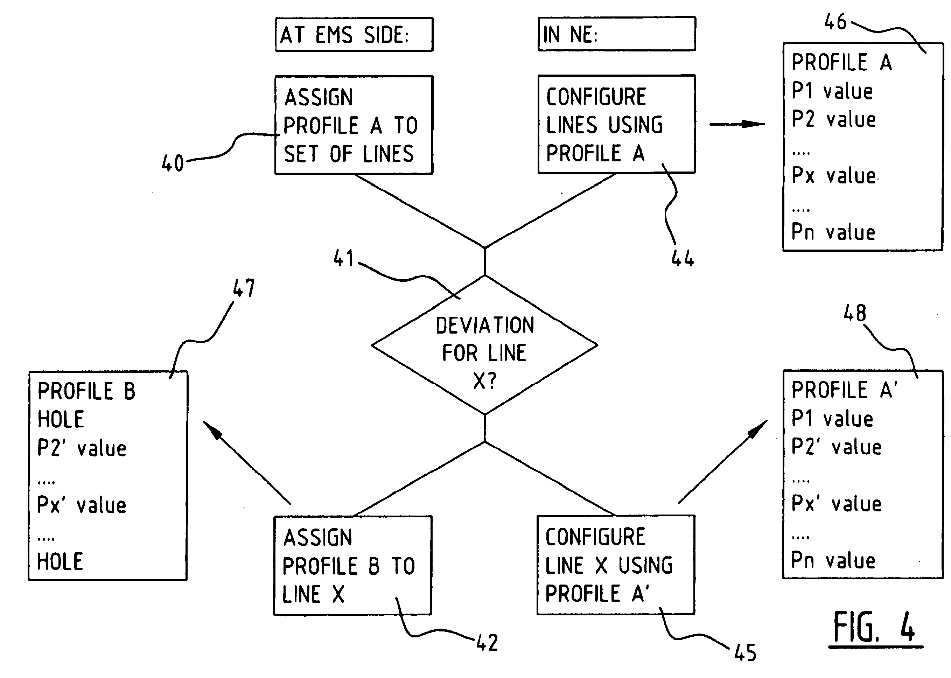

With reference to figures 3 and 4, we will explain below how the concept of the invention can be used in such a network configuration.

To maximise the coverage of new multimedia services, lines must be operated at the highest possible data rate while increasing both the quality and the stability. In that regard the configuration parameters (such as the bit rate, the interleaving delay, the transmit power spectral density, etc) of lines that are in service can be optimized according to the line conditions. A typical normal profile of a DSL line contains more than 100 parameters. For fine-tuning usually only about 10% of the parameters have to be overruled. Fine-tuning will generally only be needed for lines with stability problems, but can also be used to further optimize the stable lines. Such a fine-tuning requires a flexible management of the configuration parameters which is provided by the system and method of the invention as set out below.

Now an embodiment of the invention will be explained referring to figures 3 and 4.

Figure 3(A) illustrates a normal configuration profile A indicated with reference numeral 31, with a number of configuration parameters Pl-Pn 32 with predefined values. As for the prior art systems, the first management system EMS1 typically configures upfront a set of profiles of type A. When configuring a line, one of these profiles A is assigned to the line by the EMS1. The node sends this profile A to the respective physical layer device, typically a modem, responsible for the configuration of the respective data line.

Figure 3(B) illustrates a so called delta configuration profile B indicated with reference numeral 35 defining the same configuration parameters P1-Pn as profile A, but only the values of a subset of configuration parameters P2', Px' 37 which deviate from the normal configuration parameters are used, the other configuration parameters being defined as "holes" 36. Such a delta profile together with a reference to a particular data line x, e.g. a specific ADSL line is sent by the second management system, also called a network analyser, towards the node. This can e.g. be done with an initiation command comprising the delta profile B and the reference to line x. Such a command may for example be required on the basis of measurement of the line conditions stability, etc as explained above.

Only in case one wishes to deviate from the general parameter value specified in the normal profile A, a different value has to be defined in the delta profile B. For all other parameters the delta profile B will have holes, indicating that the general parameter values apply. Such a hole can for example be a predefined value which is not physically possible for the parameter, and which is recognised by the node as an indication that the normal parameter value applies.

Now an embodiment of the method for configuring a data line will be set out with reference to figure 4. In a first step 40 a normal line profile A indicated with reference 46 is assigned to a number of data lines connected to a node. The management of such a configuration is typically done by a first management system, wherein the node sends the profile A to the physical layer devices responsible for the configuration of the different data lines (step 44).

If there is a need for a particular line x for deviating from the general values for one or more parameters of profile A (step 41), a dedicated delta profile B indicated with reference 47 is created and assigned to line x in step 42. This profile must be merged with profile A in order to obtain a new profile A' indicated with reference 48 containing the general values for the holes in the delta profile B, and new values for the parameters of the subset P2', Px'. This new profile A' is then used to configure line x (step 45). The management of this line-specific configuration is typically done by a second management system, wherein the node sends the profile A' to the physical layer device responsible for the configuration of line x.

The skilled person will understand that the two management systems refer to two applications which could also be implemented as one application or system, but this would usually be less efficient.

Since the profile amendments only define a so called delta configuration with a limited number of parameters, only this delta configuration has to be stored in the system. This significantly reduces the memory requirements and the impact on the performance since such additional small profile amendments can be managed in a more performing way.

In conclusion the invention provides a flexible solution to define line specific configuration parameters without abandoning the profile concept. For each parameter defined within a normal profile, this solution allows to configure a line-specific value whenever necessary.

While the principles of the invention have been set out above in connection with specific embodiments, it is to be clearly understood that this description is merely made by way of example and not as a limitation of the scope of protection which is determined by the appended claims.

## Claims

1. Access node (NE) arranged for communicating with a network analyzer (EMS) for managing the configuration of a number of data lines by means of configuration profiles, each profile containing a set of configuration parameters, the access node comprising means for storing a general profile (A) with a predefined set of configuration parameters, **characterized in that** the access node is arranged for:
- receiving a subset of the set of configuration parameters of the general profile and a reference to a specific data line to be changed, from the network analyzer, said subset containing values deviating from the corresponding values in the general profile;
- combining the general profile with this subset, wherein only the values of the parameters of the general profile which are contained in the subset, are overwritten, in order to obtain a line specific profile for configuring the specific data line.

2. Access node according to claim 1, **characterized in that** the access node is provided with means for connecting the system to one or more DSL lines, such as HDSL, SDSL, ADSL, RADSL, or VDSL lines.

3. Access node according to claim 1, **characterized in that** the access node is a DSLAM.

4. Access node according to claim 1, **characterized in that** the access node comprises storage means for storing a subset of configuration parameters for each data line connected to the access node.

5. Network analyzer (EMS) arranged for communicating with a number of access nodes (NEs) according to any of the claims 1-4 for managing the configuration of a number of data lines by means of configuration profiles, each profile containing a set of configuration parameters, **characterized in that** the management system is arranged for sending a subset of the set of configuration parameters of the general profile and a reference to a specific data line to be changed, to an access node, said subset containing the values of the configuration parameters to be changed and said subset containing values deviating from the corresponding values in the general profile.

6. Network analyzer according to claim 5, arranged for communicating with a DSLAM for managing the configuration of a number of DSL lines, **characterized in that** the management system is arranged for sending a subset of the set of configuration parameters of a DSL line and a reference to a specific DSL line to be changed, to the DSLAM.

7. System for managing the configuration of a number of data lines by means of configuration profiles, comprising:
- a first management system arranged for communicating with an access node (NE) for managing the configuration of a number of data lines by means of configuration profiles, each profile containing a set of configuration parameters, and arranged for sending a general profile with a predefined set of configuration parameters to an access node;
- a network analyzer according to claim 5.

8. System according to claim 7, **characterized in that** the second network analyzer is arranged for sending the subset in the same profile format as the general profile, wherein the parameters not contained in the subset are given a specific value indicating that the parameter does not have to be changed.

9. Method for the managing by an access node of a number of data lines by means of configuration profiles, each profile containing a set of configuration parameters, wherein a general profile (A) with a predefined set of configuration parameters is assigned to each data line, **characterized by**
- using a subset of the set of configuration parameters for a specific data line to be changed and a reference to the specific data line to be changed, said subset containing the values of the configuration parameters to be changed.
- combining the set of predefined configuration parameters with this subset, wherein only the parameters of the profile which are contained in the subset, are overwritten, in order to obtain an amended profile (A')
- using the amended profile for configuring the specific data line.

10. Method according to claim 9, **characterized in that** the condition of a number of data lines is being monitored, and that in case of a bad condition a suitable subset of the configuration parameters to be changed is prepared, said subset being used for creating the amended profile.

## Patentansprüche

1. Zugangsknoten (NE), ausgelegt für die Kommunikation mit einem Netzwerkanalysator (EMS) zum Verwalten der Konfiguration einer Anzahl von Datenleitungen anhand von Konfigurationsprofilen, wobei jedes Profil einen Satz von Konfigurationsparametern enthält, wobei der Zugangsknoten Mittel zum Speichern eines allgemeinen Profils (A) mit einem vordefinierten Satz von Konfigurationsparametern umfasst, **dadurch gekennzeichnet, dass** der Zugangsknoten ausgelegt ist für:
- Den Empfang eines Teilsatzes des Satzes von Konfigurationsparametern des allgemeinen Profils und eines Verweises auf eine spezifische zu ändernde Datenleitung von dem Netzwerkanalysator, wobei der besagte Teilsatz Werte enthält, welche von den entsprechenden Werten in dem allgemeinen Profil abweichen;
- das Kombinieren des allgemeinen Profils mit diesem Untersatz, wobei nur diejenigen Werte von Parametern des allgemeinen Profils, welche in dem Teilsatz enthalten sind, überschrieben werden, um ein leitungsspezifisches Profil für die Konfiguration der spezifischen Datenleitung zu erhalten.

2. Zugangsknoten nach Anspruch 1, **dadurch gekennzeichnet, dass** der Zugangsknoten mit Mitteln zum Koppeln des Systems an eine oder mehrere DSL-Leitungen wie beispielsweise HDSL-, SDSL, ADSL-, RADSL- oder VDSL-Leitungen versehen ist.

3. Zugangsknoten nach Anspruch 1, **dadurch gekennzeichnet, dass** der Zugangsknoten ein DSLAM ist.

4. Zugangsknoten nach Anspruch 1, **dadurch gekennzeichnet, dass** der Zugangsknoten Speichermittel zum Speichern eines Teilsatzes von Konfigurationsparametern für jede an den Zugangsknoten gekoppelte Datenleitung umfasst.

5. Netzwerkanalysator (EMS), ausgelegt für die Kommunikation mit einer Anzahl von Zugangsknoten (NEs) gemäß einem beliebigen der Ansprüche 1-4 zum Verwalten der Konfiguration einer Anzahl von Datenleitungen anhand von Konfigurationsprofilen, wobei jedes Profil einen Satz von Konfigurationsparametern enthält, **dadurch gekennzeichnet, dass** das Verwaltungssystem für das Senden eines Teilsatzes des Satzes von Konfigurationsparametern des allgemeinen Profils und eines Verweises auf eine spezifische zu ändernde Datenleitung an einen Zugangsknoten ausgelegt ist, wobei der besagte Teilsatz die Werte der zu ändernden Konfigurationsparameter enthält, und wobei der besagte Teilsatz Werte, welche von den entsprechenden Werten in dem allgemeinen Profil abweichen, enthält.

6. Netzwerkanalysator nach Anspruch 5, ausgelegt für die Kommunikation mit einem DSLAM zum Verwalten der Konfiguration einer Anzahl von DSL-Leitungen, **dadurch gekennzeichnet, dass** das Verwaltungssystem für das Senden eines Teilsatzes des Satzes von Konfigurationsparametern einer DSL-Leitung und eines Verweises auf eine spezifische zu ändernde DSL-Leitung an den DSLAM ausgelegt ist.

7. System zur Verwaltung der Konfiguration einer Anzahl von Datenleitungen anhand von Konfigurationsprofilen, umfassend:
- Ein erstes Verwaltungssystem, ausgelegt für die Kommunikation mit einem Zugangsknoten (NE) zum Verwalten der Konfiguration einer Anzahl von Datenleitungen anhand von Konfigurationsprofilen, wobei jedes Profil einen Satz von Konfigurationsparametern enthält, und ausgelegt für das Senden eines allgemeinen Profils mit einem vordefinierten Satz von Konfigurationsparametern an einen Zugangsknoten;
- einen Netzwerkanalysator gemäß Anspruch 5.

8. System nach Anspruch 7, **dadurch gekennzeichnet, dass** der zweite Netzwerkanalysator für das Senden des Teilsatzes in demselben Profilformat wie das allgemeine Profil ausgelegt ist, wobei den nicht in dem Teilsatz enthaltenen Parametern ein spezifischer Wert gegeben wird, welcher anzeigt, dass der Parameter nicht geändert werden muss.

9. Verfahren zur Verwaltung, durch einen Zugangsknoten, einer Anzahl von Datenleitungen anhand von Konfigurationsprofilen, wobei jedes Profil einen Satz von Konfigurationsparametern enthält, wobei jeder Datenleitung ein allgemeines Profil (A) mit einem vordefinierten Satz von Konfigurationsparametern zugeordnet wird, **gekennzeichnet durch**
- das Verwenden eines Teilsatzes des Satzes von Konfigurationsparametern für eine spezifische zu ändernde Datenleitung, und eines Verweises auf die spezifische zu ändernde Datenleitung, wobei der besagte Untersatz die Werte der zu ändernden Konfigurationsparameter enthält;
- das Kombinieren des Satzes von vordefinierten Konfigurationsparametern mit diesem Teilsatz, wobei nur diejenigen Parameter des Profils, welche in dem Teilsatz enthalten sind, überschrieben werden, um ein geändertes Profil (A') zu erhalten;
- das Verwenden des geänderten Profils für die Konfiguration der spezifischen Datenleitung.

10. Verfahren nach Anspruch 9, **dadurch gekennzeichnet, dass** der Zustand einer Anzahl von Datenleitungen überwacht wird, und dass im Fall eines schlechten Zustands ein geeigneter Teilsatz der zu ändernden Konfigurationsparameter vorbereitet wird, wobei der besagte Teilsatz für das Erstellen des geänderten Profils verwendet wird.

## Revendications

1. Noeud d'accès (NE) organisé pour communiquer avec un analyseur de réseau (EMS) afin de gérer la configuration d'un certain nombre de lignes de données au moyen de profils de configuration, chaque profil contenant un ensemble de paramètres de configuration, le noeud d'accès comprenant des moyens pour stocker un profil général (A) avec un ensemble prédéfini de paramètres de configuration, **caractérisé en ce que** le noeud d'accès est organisé pour :
- recevoir de la part de l'analyseur de réseau un sous-ensemble de l'ensemble de paramètres de configuration du profil général et une référence à une ligne de données spécifique à modifier, ledit sous-ensemble contenant des valeurs dérivées des valeurs correspondantes dans le profil général ;
- combinaison du profil général avec ce sous-ensemble, seules les valeurs des paramètres du profil général qui sont incluses dans le sous-ensemble étant réécrites, afin d'obtenir un profil spécifique à la ligne pour configurer la ligne de données spécifique.

2. Noeud d'accès selon la revendication 1, **caractérisé en ce que** le noeud d'accès est doté de moyens pour connecter le système à une ou plusieurs lignes DSL telles que des lignes HDSL, SDSL, ADSL, RADSL ou VDSL.

3. Noeud d'accès selon la revendication 1, **caractérisé en ce que** le noeud d'accès est un DSLAM.

4. Noeud d'accès selon la revendication 1, **caractérisé en ce que** le noeud d'accès comprend des moyens de stockage pour stocker un sous-ensemble de paramètres de configuration pour chaque ligne de données connectée au noeud d'accès.

5. Analyseur de réseau (EMS) organisé pour communiquer avec un certain nombre de noeuds d'accès (NE) selon l'une quelconque des revendications 1-4 pour gérer la configuration d'un certain nombre de lignes de données au moyen de profils de configuration, chaque profil contenant un ensemble de paramètres de configuration, **caractérisé en ce que** le système de gestion est organisé pour envoyer à un noeud d'accès un sous-ensemble de l'ensemble de paramètres de configuration du profil général et une référence à une ligne de données spécifique à modifier, ledit sous-ensemble contenant les valeurs des paramètres de configuration à modifier et ledit sous-ensemble contenant des valeurs dérivées des valeurs correspondantes dans le profil général.

6. Analyseur de réseau selon la revendication 5, organisé pour communiquer avec un DSLAM afin de gérer la configuration d'un certain nombre de lignes DSL, **caractérisé en ce que** le système de gestion est organisé pour envoyer au DSLAM un sous-ensemble de l'ensemble de paramètres de configuration d'une ligne DSL et une référence à une ligne DSL spécifique à modifier.

7. Système de gestion de la configuration d'un certain nombre de lignes de données au moyen de profils de configuration, comprenant :
- un premier système de gestion organisé pour communiquer avec un noeud d'accès (NE) afin de gérer la configuration d'un certain nombre de lignes de données au moyen de profils de configuration, chaque profil contenant un ensemble de paramètres de configuration, et organisé pour envoyer à un noeud d'accès un profil général avec un ensemble prédéfini de paramètres de configuration ;
- un analyseur de réseau selon la revendication 5.

8. Système selon la revendication 7, **caractérisé en ce que** le deuxième analyseur de réseau est organisé pour envoyer le sous-ensemble dans le même format de profil que le profil général, les paramètres non inclus dans le sous-ensemble se voyant attribuer une valeur spécifique indiquant qu'il n'est pas nécessaire de modifier le paramètre.

9. Procédé de gestion par un noeud d'accès d'un certain nombre de lignes de données au moyen de profils de configuration, chaque profil contenant un ensemble de paramètres de configuration, un profil général (A) ayant un ensemble prédéfini de paramètres de configuration étant attribué à chaque ligne de données, **caractérisé par**
- utilisation d'un sous-ensemble de l'ensemble de paramètres de configuration pour une ligne de données spécifique à modifier et une référence à la ligne de données spécifique à modifier, ledit sous-ensemble contenant les valeurs des paramètres de configuration à modifier ;
- combinaison de l'ensemble de paramètres de configuration prédéfinis avec ce sous-ensemble, seuls les paramètres du profil qui sont inclus dans le sous-ensemble étant réécrits, afin d'obtenir un profil modifié (A') ;
- utilisation du profil modifié pour configurer la ligne de données spécifique.

10. Procédé selon la revendication 9, **caractérisé en ce que** l'état d'un certain nombre de lignes de données est surveillé, et **en ce que** dans le cas d'un mauvais état, un sous-ensemble approprié de paramètres de configuration à modifier est préparé, ledit sous-ensemble étant utilisé pour créer le profil modifié.
